# EUROPÄISCHE PATENTSCHRIFT

(11) **EP 3 245 149 B1**
(45) Veröffentlichungstag und Bekanntmachung des Hinweises auf die Patenterteilung: **06.02.2019**
(21) Anmeldenummer: 15820855.3
(22) Anmeldetag: 22.12.2015
(51) Int. Cl.: B65G 57/00, B65G 57/22, B65G 57/24, B65B 17/02, B65B 35/30, B65B 35/58

(54) **VERFAHREN ZUM HERSTELLEN EINER LAGE AUS GEBINDEN**
METHOD FOR THE PRODUCTION OF A LAYER OF MULTIPACKS
PROCÉDÉ DE FABRICATION D'UNE COUCHE D'EMBALLAGES

(30) Priorität: 12.01.2015 DE 102015100330
(43) Veröffentlichungstag der Anmeldung: 22.11.2017
(73) Patentinhaber: KHS GmbH, 44143 Dortmund (DE); KHS Corpoplast GmbH, 22145 Hamburg (DE)
(72) Erfinder: RINGHOLT, Matthias, 59439 Holzwickede (DE); WIESE, Arne-Fritz, 22926 Ahrensburg (DE); HOLZER, Hans-Werner, 67596 Dittelsheim-Hessloch (DE); EHMER, Wilfried, 44227 Dortmund (DE)
(86) Internationale Anmeldenummer: PCT/EP2015/081045
(87) Internationale Veröffentlichungsnummer: WO 2016/113094

(56) Entgegenhaltungen:
- DE-A1- 3 711 766
- DE-A1-102009 025 824
- US-A- 5 765 336

## Beschreibung

Die Erfindung betrifft ein Verfahren zum Herstellen einer Lage aus Gebinden und eine Vorrichtung zur Durchführung des Verfahrens.

Das Herstellen einer Lage aus Gebinden ist z. B. aus der DE 10 2009 025 824 A1 oder der EP 2 096 039 A1 bekannt. Gebinde, die durch Schrumpffolie zusammengehalten werden, werden mit Klebepunkten versehen und gefügt, so dass die Gebinde zu einer Lage verbunden werden. Die DE 37 11 766 A1 beschreibt ein solches Verfahren und eine solche Vorrichtung für Kartonverpackungen, die Behälter enthalten.

Nachteilig an diesen Verfahren ist, dass die Gebinde nach dem Aufbringen der Klebepunkte noch manipuliert werden müssen, um zu einer Lage gruppiert zu werden, wobei das Manipulieren schwierig ist, wenn bereits ein Klebepunkt aufgetragen wurde und die Mittel zum Manipulieren weder den Klebepunkt beschädigen noch durch den Klebepunkt verunreinigt werden sollen.

Es ist daher Aufgabe der Erfindung, ein Verfahren und eine Vorrichtung vorzuschlagen, bei der das Fügen von Gebinden zu einer Lage ohne die vorstehend beschriebenen Nachteile erfolgt.

Diese Aufgabe wird gelöst durch ein Verfahren nach Anspruch 1 und eine Vorrichtung nach Anspruch 12.

Das erfindungsgemäße Verfahren zum Herstellen von einer Lage aus Gebinden betrifft Gebinde, die miteinander verbundene Behälter aufweisen. Die herzustellende Lage weist dabei mindestens ein erstes und ein zweites Gebinde, meist aber bis zu 20 Gebinde auf. Das Herstellen einer Lage mit den Schritten des Bereitstellens eines ersten und eines zweiten Gebindes, die in loser Verdichtung zu einer Lage vorgruppiert sind, in einem Aufnahmebereich gefolgt von dem finalen Verdichten der vorgruppierten Gebinde zu einer Lage miteinander verbundenen Gebinde ist dadurch gekennzeichnet, dass während oder nach dem Bereitstellen der vorgruppierten Gebinde, aber vor dem finalen Verdichten der Gebinde zu einer Lage ein Klebepunkt auf ein erstes Gebinde aufgebracht wird, und dass beim finalen Verdichten der vorgruppierten Gebinde zu einer Lage aus dem Klebepunkt eine Klebstelle zwischen zwei aneinander grenzenden Gebinden erzeugt wird.

Mehrere Lagen werden übereinander gestapelt, typischerweise um auf einer Palette gesichert und transportiert zu werden. Es ist ein besonderer Vorteil des erfindungsgemäßen Verfahrens, dass Stapel aus zu einer erfindungsgemäßen Lage verbundenen Gebinde, wenn überhaupt, dann nur noch in geringem Maße zusätzlich gesichert werden müssen, z. B. durch Umreifung des Stapels bzw. der Palette oder durch Anbringen einer Schrumpffolie oder -haube.

Mit den bekannten Verfahren können Gebinde nur in Reihen zu Lagen geordnet werden, weil eine Manipulation, insbesondere ein Drehen der Gebinde nach dem Auftragen des Klebepunkts nicht möglich ist, ohne den Klebepunkt zu beschädigen oder die Vorrichtung zu verschmutzen. Erfindungsgemäß ist die Ausrichtung der Gebinde bereits erfolgt, wenn der Klebepunkt aufgetragen wird. Das Verfahren zum Herstellen einer Lage sieht vor, dass die Gebinde zunächst in einem ersten Schritt vorgruppiert werden, das heißt, sie werden in die für die jeweilige Lage vorgesehene Richtung gedreht und sie werden so nahe zusammengehalten, dass ein Drehen der Gebinde nicht mehr möglich und nicht mehr nötig ist. Die Gebinde befinden sich also in einem ersten Stadium der Verdichtung, einer verdichteten, in der Regel etwas losen Verdichtung. Die Gebinde sind im Stadium ersten Verdichtung bereits ausgerichtet und gruppiert, aber noch nicht miteinander klebend oder haftend verbunden.

Erst während oder nach dem Ausrichten der Gebinde wird ein Klebepunkt aufgetragen. Nach dem Auftragen des Klebepunkts werden die Gebinde durch Fügen in ein zweites Stadium der Verdichtung, die finale Verdichtung, überführt. Durch Anpressen oder Andrücken der Gebinde entsteht eine Klebstelle aus dem Klebepunkt und fügt die Gebinde zu einer Lage zusammen. Die Mittel zum Fügen sind an sich bekannt, sie pressen die Gebinde aneinander, wobei der Klebepunkt mit einem angrenzenden Gebinde in Kontakt kommt und trocknet oder aushärtet. Ggf. sind Mittel zum Aushärten des Klebstoffs vorhanden, z. B. eine Strahlungsvorrichtung für strahlungshärtende, insbesondere UV-härtende Klebstoffe oder eine Wärmequelle zum Trocknen des Klebstoffs. Bevorzugt wird ein Klebstoff verwendet, der keine Mittel zum Aushärten des Klebstoffs erfordert, weil die erfindungsgemäß hergestellten Lage ohne weiteres eine Fläche von 1,5 m x 1,5 m einnehmen können, so dass der einzelne Klebepunkt bzw. die Klebstelle schlecht erreichbar ist für Strahlung oder Wärme.

Zum Erzeugen des Klebepunkts wird bevorzugt ein strahlungshärtender Klebstoff, Heißleim oder ein beidseitig klebendes Band verwendet. Der Klebstoff wird durch z. B. eine Düse auf das Gebinde aufgetragen und während des Fügens zu einer Klebstelle getrocknet oder ausgehärtet, die zwei Gebinde miteinander verbindet. Als Mittel zum Erzeugen des Klebepunkts werden Klebedüsen oder Mittel zum Anbringen von beidseitig klebenden Bandabschnitten bevorzugt. Vereinfachend wird im Folgenden von Klebstoffdüsen gesprochen, wobei aber Mittel zum Anbringen von Bandstücken ausdrücklich mit gemeint und eingeschlossen sind.

Nach einer besonders vorteilhaften Ausführung der Erfindung werden mindestens zwei Gebinde zu einer Lage gefügt, die ausschließlich mittels Klebstellen verbundene Behälter aufweisen. Dadurch, dass keine äußere Hülle, z. B. aus Karton oder Schrumpffolie die Gebinde umgibt, kann die Klebstelle überall dort angebracht sein, wo Behälter verschiedener Gebinde aneinander anliegen, ohne Rücksicht auf eine äußere Hülle nehmen zu müssen. Vorteilhaft weisen die Klebstellen zwischen den Gebinden eine geringere Klebkraft auf als die Klebstellen zwischen den Behältern der Gebinde, um beim Herauslösen eines Gebindes aus der Lage eine saubere Trennung der einzelnen Gebinde voneinander zu ermöglichen. Erreicht werden kann eine geringere Klebkraft z. B. durch die Auswahl des Klebstoffs oder durch eine kleinere Klebstelle bzw. durch eine Klebstelle mit besonderer Ausrichtung, die mit geringerer Kraft zu lösen ist.

Die Gebinde, in denen z. B. Flaschen, Dosen oder Gläser oder andere Einzelverpackungen zu einer einlagigen oder mehrlagigen Einheit zusammengefasst sind, sind in loser Verdichtung vorgruppiert, sie sind dabei in einer Ebene angeordnet, insbesondere befinden sich die unteren Enden der Behälter in einer Ebene. Eine bevorzugte Ausführung des erfindungsgemäßen Verfahrens sieht vor, dass die in loser Verdichtung vorgruppierten Gebinde in wechselnder Ausrichtung angeordnet sind. Gebinde, die keine quadratischen Außenmaße aufweisen, werden vorteilhaft in wechselnder Ausrichtung zu einer Lage vorgruppiert, so dass ein Gebinde, bezogen auf die Längsausrichtung des Gebindes, mit einer ersten Ausrichtung angrenzt an ein Gebinde mit einer zweiten Ausrichtung. Durch diese wechselnde Ausrichtung entsteht eine Lage, bei der die Gebinde ineinander verzahnt sind, so dass die Lage eine zusätzliche mechanische Festigkeit und Verwindungssteifigkeit erhält. Alternativ oder in Kombination mit der wechselnden Ausrichtung können Gebinde auch in Reihen angeordnet werden. Vorteilhaft wird der Klebepunkt aufgetragen, nachdem die Gebinde z. B. durch Drehen in die jeweils vorgegebene Ausrichtung gebracht wurden.

Allgemein können die zu einer Lage vorgruppierten Gebinde in der gewünschten Ausrichtung gehalten werden. Mittel zum Halten der Gebinde können beispielsweise als Leisten, bahnförmige Führungen oder Greifer ausgebildet sein, die einzelne oder mehrere Gebinde halten. Die Mittel zum Halten der Gebinde können ortsfest oder beweglich sein und die Gebinde während des Förderns halten oder die gehaltenen Gebinde selbst fördern. Die Mittel zum Halten der Gebinde können Teile einer Lage halten, bevorzugt halten sie sämtliche Gebinde einer Lage. Die Mittel zum Halten können im Abstand von den Gebinden angeordnet sein, z. B. um eine unerwünschte Drehung einzelner Gebinde zu verhindern, sie können aber die Gebinde auch fest umschließen oder pressen.

Erfindungsgemäß werden die in loser Verdichtung vorgruppierten ersten und zweiten Gebinde gespreizt und in gespreiztem Zustand wird ein Klebepunkt aufgetragen. Das Spreizen der bereits vorgruppierten Gebinde gewährleistet, dass nach dem Auftragen des Klebepunkts keine weitere Drehung der Gebinde zueinander mehr erforderlich ist. Das Ausrichten der Gebinde in vorgruppierter Anordnung ist bereits vor dem Spreizen erfolgt. Das Spreizen ermöglicht insbesondere das Anbringen von Klebepunkten an Gebinden mit wechselnder Anordnung oder bei Gebinden, die in nicht-gleich verlaufenden Reihen (Längs- und Querreihen) angeordnet sind.

Nach einer ersten Ausführung der Erfindung erfolgt das Spreizen durch Einbringen eines Distanzelements, im Folgenden, unabhängig von der Form auch als Trennkeil bezeichnet, zwischen ein erstes und ein zweites Gebinde, das die Gebinde von oben her eindringend spreizt. Dabei bleiben die unteren Enden der Gebinde in der Regel aneinander anliegend, insbesondere, wenn die Gebinde durch Mittel zum Halten in der vorgruppierten Lage gehalten werden. Eine am Distanzelement angeordnete Klebstoffdüse bringt einen Klebepunkt auf ein Gebinde auf. Distanzelement bzw. Trennkeil und Klebstoffdüse werden aus den vorgruppierten Gebinden herausgehoben. Entweder werden nun in derselben Lage, ggf. nach Drehen der Lage, nach Spreizen durch den Trennkeil zwischen anderen Gebinden weitere Klebepunkte angebracht. Oder eine Mehrzahl von Trennkeilen, die je nach Bedarf einteilig oder mehrteilig ausgeführt sein können, werden zwischen die vorgruppierten Gebinde gesenkt und mehrere, bevorzugt sämtliche Klebepunkte werden in einem Absenk-Vorgang der Trennkeile erzeugt. Insbesondere dann, wenn die Gebinde nicht in Reihen angeordnet sind, können der oder die Trennkeile die Gebinde z. B. zwei Mal nacheinander in unterschiedliche Richtungen spreizen, dazwischen kann die Lage der vorgruppierten Gebinde oder der Trennkeil gedreht werden, so dass Gebinde mit unterschiedlichen Reihen effizient mit Klebepunkten versehen werden können. Nach einer bevorzugten Ausführung der Erfindung ist der Trennkeil sowohl vertikal zwischen die vorgruppierten Gebinde verfahrbar als auch bezogen auf die Lage der vorgruppierten Gebinde, also z. B. von einer Reihe der Lage zur nächsten oder auch, um den Vorgang des Spreizens und Anbringens von Klebepunkten auch durchführen zu können, während die Lage vorgruppierter Behälter gefördert wird.

Nach einer dritten Ausführung des erfindungsgemäßen Verfahrens werden ein erstes und ein zweites Gebinde während oder nach dem Vorgruppieren, insbesondere nach dem Ausrichten der Gebinde in die zur Herstellung der Lage erforderliche Ausrichtung mit einer ersten und mit einer zweiten Beschleunigung unterschiedlich beschleunigt. Durch das unterschiedliche Beschleunigen entsteht eine Lücke zwischen den ersten und zweiten Gebinden, in die ein Distanzelement mit einer Klebstoffdüse einfahren und mindestens einen Klebepunkt auf einem ersten Gebinde anbringen kann. Das Verfahren kann so ausgelegt sein, dass die Mittel zum Beschleunigen, z. B. Förderbänder mit unterschiedlicher Geschwindigkeit oder Mitnehmer, die Gebinde unterschiedlich schnell fördern, stets an derselben Stelle eine Lücke zwischen den Gebinden entstehen lassen, sodass Düsenträger mit Klebstoffdüsen stets an derselben Stelle zwischen das erste und zweite Gebinde einfahren können. Alternativ können die Düsenträger in Abhängigkeit von der Größe der Lücke zwischen den Gebinden gesteuert werden, wobei die Lücke z. B. optisch erfasst werden kann.

Nach einer zweiten Ausführung der Erfindung sind die lose verdichteten, vorgruppierten Gebinde in einem Zentrierrahmen angeordnet, beispielsweise in einem umlaufenden Rahmen aus Leisten, der bevorzugt in geringem Abstand von den Gebinden angeordnet ist. Der Zentrierrahmen wird über einer kuppelförmigen Hubvorrichtung ausgerichtet. Die Hubvorrichtung hebt die Gebinde am unteren Ende an, wobei die Gebinde in der Mitte der Lage am weitesten angehoben werden, die Gebinde, die an den Zentrierrahmen angrenzen, werden am wenigsten angehoben. Während die Gebinde durch die Hubvorrichtung angehoben sind, fahren von oben Düsenträger mit Klebstoffdüsen zwischen die Gebinde und bringen mindestens an einem ersten Gebinde einen Klebepunkt an, in der Regel werden sämtliche Klebepunkte, die zum Herstellen der Lage aus den vorgruppierten Gebinden erforderlich sind, gleichzeitig angebracht.

Allen drei Ausführungen des erfindungsgemäßen Verfahrens ist gemein, dass Klebepunkte auf die bereits ausgerichteten, also lose verdichteten, vorgruppierten Gebinde aufgebracht werden, wobei das Spreizen das Anbringen der Klebepunkte vereinfacht. Vorteilhaft hierbei ist, dass vor dem Fügen der Gebinde zu einer Lage weder die Klebepunkte beschädigt, z. B. verwischt oder abgetragen werden noch die Vorrichtung verschmutzt wird.

Nach einer besonders bevorzugten Ausführung der Erfindung werden nur ausgewählte Gebinde mit Klebepunkten versehen. Insbesondere randständige Gebinde werden mit Klebepunkten versehen, weil sich herausgestellt hat, dass eine Stabilisierung der randständigen Gebinde durch Klebstellen eine Lage aus Gebinden bereits erheblich stabilisiert. Nach einer weiter vorteilhaften Ausführung können auch Gruppen von Gebinden durch Klebstellen verbunden werden, insbesondere z. B. eine Gruppe von zentral angeordneten Gebinden, vor allem dann, wenn auch die randständigen Gebinde durch Klebstellen miteinander verbunden sind.

Bevorzugt werden mit dem erfindungsgemäßen Verfahren Gebinde zu einer Lage gefügt, die ausschließlich durch Klebstellen verbunden sind, vorteilhaft durch Klebstellen, die, bezogen auf die Höhe der Behälter, in der unteren Hälfte des Behälters angebracht sind. Es hat sich als weiter vorteilhaft erwiesen, wenn die auch Klebstellen zwischen den Gebinden in der unteren Hälfte der Gebinde angebracht sind.

Es wird besonders bevorzugt, wenn nach dem Bereitstellen vorgruppierter, lose verdichteter Behälter in einer ersten Lage Klebstoff auf das obere Ende mindestens eines in der Lage in einem Gebinde fixierten Behälters aufgebracht wird. In einem zweiten Schritt wird auf diese erste Lage eine zweite Lage oder eine bahnförmige Zwischenlage aufgebracht und es wird eine Klebstelle zwischen der zweiten Lage oder der bahnförmigen Zwischenlage erzeugt. Auf diese Weise wird der Stapel aus mindestens einer ersten und zweiten Lage von Gebinden zusätzlich stabilisiert.

Die Erfindung umfasst weiter eine Vorrichtung, die ausgelegt ist, das erfindungsgemäße Verfahren umzusetzen. Entsprechend weist die erfindungsgemäße Vorrichtung zum Herstellen einer Lage aus mindestens einem ersten und einem zweiten Gebinde, die jeweils untereinander verbundene Behälter aufweisen, Mittel zum Fördern und Gruppieren von Gebinden, Mittel zum Aufbringen eines Klebepunktes und Mittel zum Fügen von Gebinden zu einer Lage sowie Mittel zum Spreizen mindestens des ersten und des zweiten Gebindes auf. Die Mittel zum Spreizen wirken bevorzugt auf Gebinde ein, die bereits auf ihre vorgegebene Ausrichtung in der herzustellenden Lage ausgerichtet sind, also auf Gebinde, die bereits, ggf. durch Drehen, ausgerichtet sind, und die, ausgehend von dieser Position dann in loser Verdichtung vorgruppiert werden oder vorgruppiert sind. Die Mittel zum Spreizen ermöglichen das Aufbringen eines Klebepunkts auf ein erstes oder zwei Gebinde, indem die Mittel zum Aufbringen, beispielsweise eine Klebstoffdüse oder Mittel zum Aufbringen eines beidseitig beschichteten Klebebands zwischen die gespreizten ersten und zweiten Gebinde einfahren und den Klebepunkt aufbringen können. Da unmittelbar an das Aufbringen des Klebepunktes und ggf. Zurückfahren der Mittel zum Spreizen die mit einem Klebepunkt versehenen Gebinde gefügt, also unter Druck durch Ausbilden von Klebstellen aus den Klebepunkten zu einer Lage gepresst werden können, erlauben die Mittel zum Spreizen das saubere und effiziente Herstellen einer Lage von Gebinden. Zusätzlich wird eine Lage von Gebinden bereitgestellt, die durch die verbesserte Qualität der Klebstellen eine verbesserte Eigenfestigkeit aufweist und dadurch eine weitere Stabilisierung eines Stapels aus erfindungsgemäßen Lagen von Gebinden, z. B. durch Umreifung oder Schrumpffolie, wenn überhaupt, dann nur in geringem Umfang erforderlich ist.

Bevorzugt sind Mittel zum Halten der in loser Verdichtung vorgruppierten Gebinde vorgesehen, die die vorgruppierten Gebinde während des Spreizens oder beim Fördern so zusammenhalten, dass sich die Gebinde nicht so weit gegeneinander verschieben oder verdrehen können, dass die gewünschte Ausrichtung der Gebinde in der Lage verändert wird. Typisch können Leisten, bahn- oder schienenförmige Begrenzungen oder Greifer eingesetzt werden, wie sie zum Manipulieren von Gebinden oder Behältern an sich bekannt sind. Nach einer bevorzugten Ausführung der Erfindung können die Mittel zum Halten Gruppen von vorgruppierten Gebinden einer Lage oder sämtliche Gebinde einer Lage umgreifen. Vorteilhaft können die Mittel zum Halten die vorgruppierten Gebinde seitlich, insbesondere am unteren Ende umfassen.

Die Mittel zum Spreizen sind vorteilhaft in einer von drei Ausführungen oder in einer Kombination dieser Ausführungen ausgebildet. Die Mittel zum Spreizen können als Trennkeil, als kuppelförmige Hubvorrichtung oder als Mittel zum Erzeugen einer ersten Beschleunigung für ein erstes Gebinde und als Mittel zum Erzeugen einer zweiten Beschleunigung für ein zweites Gebinde ausgeführt sein, so wie vorstehend im Zusammenhang mit dem Verfahren in ihrer Wirkungsweise beschrieben.

Vorteilhaft sind zum Herstellen einer Lage aus Gebinden mehrere Trennkeile oder Mittel zum Erzeugen einer ersten und zweiten Beschleunigung vorgesehen, damit in einem Arbeitsgang eine mindestens eine Gruppe von Gebinden mit Klebepunkten versehen werden kann, vorzugsweise so viele Gebinde, dass die vollständige Lage gefügt werden kann. Die Gebinde werden von ihrer Herstellung bis zur Herstellung der Lage über verschiedene Bearbeitungsstationen gefördert. Das Aufbringen der Klebepunkte erfolgt dabei häufig im Stillstand, so dass das Aufbringen der Klebepunkte mit einem Abbremsen und Beschleunigen verbunden ist. Dieser Energieaufwand wird minimiert, wenn das Anbringen sämtlicher Klebepunkte einer Lage in einem oder zwei Arbeitsgängen erfolgen kann, weil mehrere Trennkeile oder Mittel zum Beschleunigen vorgesehen sind.

Insbesondere, wenn Gebinde mit wechselnder Ausrichtung zu einer Lage zusammengefasst werden sollen, zeigen die vorgruppierten Gebinde in loser Verdichtung keine durchgehenden Teilungslinien zwischen den Gebinden sondern lediglich Abschnitte von parallelen Teilungslinien. Um hier effizient Klebepunkte setzen zu können, sind zweckmäßig an sich bekannte Mittel zum Drehen vorgesehen, die ein Einwirken der Mittel zum Spreizen an jedem Abschnitt einer Teilungslinie zwischen Gebinden ermöglichen. In der Regel verlaufen die Teilungslinien rechtwinklig, so dass eine Drehung der vorgruppierten Gebinde um 90° zu ermöglichen ist. Bevorzugt halten die Mittel zum Halten die vorgruppierten Gebinde während der Drehung zusammen.

Die Hubvorrichtung weist in einer ersten vorteilhaften Ausführung eine kuppelförmige Platte auf, deren Fläche in etwa den Abmessungen der zu erzeugenden Lage entspricht. Das Ausmaß der Wölbung ermittelt der Fachmann in wenigen orientierenden Versuchen; es hängt insbesondere von der Höhe und dem Umfang sowie der Zahl der Gebinde ab, aber auch von dem Raum, den die Mittel zum Aufbringen von Klebepunkten benötigen, um eine vorgegebene Stelle am Gebinde zu erreichen. Es ist daher weiter bevorzugt, wenn die Hubvorrichtung einzelne Segmente aufweist, deren Bewegung in senkrechter Richtung, der Hub, einzeln, bevorzugt aber abgestimmt aufeinander gesteuert werden kann, Auf diese Weise kann die Hubvorrichtung z. B. an unterschiedliche Lagen und Gebinde angepasst werden, denn die jeweils genutzten Segmente können an die Abmessungen der Lage und die Form und Größe der Gebinde angepasst werden.

Das Vorgruppieren der Gebinde in loser Verdichtung und das anschließende Verbinden der Gebinde zu einer Lage erfordert regelmäßig das Transportieren oder Fördern der Gebinde. Insbesondere im Zustand loser Verdichtung ist ein Verdrehen der Gebinde in ihrer Ausrichtung zueinander nicht erwünscht, weil dies die Ausbildung und Herstellung der Lage empfindlich stört. Bevorzugt sind die vorgruppierten Gebinde daher von Mitteln zum Führen umgeben, typisch von Leisten, Schienen, Rahmen, bahnförmigen Führungen oder von Greifern, die zudem ein Heben der Gebinde ermöglichen. Die Mittel zum Führen können ortsfest sein oder sie können sich mit dem Gebinde bewegen; dies ist meist mit den jeweiligen Fördervorrichtungen abgestimmt.

Die Mittel zum Führen können in einem Abstand zu den Gebinden angeordnet sein, der gerade noch wirksam ein Drehen der Gebinde zueinander verhindert. Sie können aber auch unter Druck auf die Gebinde einwirken, ggf. auch als Mittel zum Fügen das Ausbilden der Klebstellen aus Klebepunkten zwischen den Gebinden bewirken. Die Mittel zum Führen wirken meist auf die randständigen Gebinde ein, es ist aber auch nicht ausgeschlossen, dass Mittel zum Führen auf Gebinde einwirken, die unter den vorgruppierten Gebinden nicht-randständig angeordnet sind.

Der besondere Vorteil des Verfahrens und der Vorrichtung besteht darin, dass die im ersten Schritt gruppierten und verdichteten Gebinde im Moment des Auftrages von Klebepunkten in der finalen Orientierung zueinander gehalten werden. Somit erfolgt kein Ausrichten der Gebinde oder einzelner Gebinde zum Zwecke der richtigen Lage zum Nachbargebinde und für die Verdichtung. Idealerweise ist nach der Herstellung des Klebepunktes nur das Schließen eines wenige Millimeter breiten Spaltes oder Öffnungskeiles zw. einzelnen Behältern nötig, was ggf. durch die Elastizität der verformten Behälter automatisch erfolgen kann. Nötigenfalls wird die Bewegung und der Druck über Außengeländer aufgebraucht.

In der Station zur Verdichtung wird dann auch die erforderliche Haltezeit zum Trocknen oder Aushärten eines Klebestoffs realisiert. Alternativ kann die Trocknungs- und Aushärtungszeit oder ein Teil hiervon, beim Überhub mittels geeignetem Greifkopf oder Fördermittel in gehaltener Formation erfolgen.

Schließlich betrifft die Erfindung eine Lage aus Gebinden, wobei mindestens ein Teil der Gebinde untereinander durch Klebstellen verbunden ist. Insbesondere ist eine Lage aus Gebinden gemeint, in der die Gebinde nicht in Reihen angeordnet sind. Typisch ist eine erfindungsgemäße Lage aus versetzt angeordneten Gebinden.

Details der Erfindung werden nachfolgend an Hand von Zeichnungen näher erläutert. Es zeigen:
Fig. 1 Schematische Darstellung des Vorgruppierens von Gebinden in loser Verdichtung,
Fig. 2 Schematische Darstellung einer Vorrichtung zum Anbringen von Klebstellen zwischen vorgruppierten Gebinden in loser Verdichtung,
Fig. 3 Schematische Darstellung einer ersten Ausführung zum Anbringen von Klebstellen zwischen Gebinden mittels eines Trennkeils,
Fig. 4 Trennkeil zum Spreizen von Gebinden nach der ersten Ausführung der Erfindung,
Fig. 5 Schematische Ablaufdarstellung des Anbringens von Klebstellen und des Fügens nach einer ersten Ausführung der Erfindung,
Fig. 6 Details zum Ablauf nach Fig. 5,
Fig. 7 Details zum Trennkeil mit Klebstoffdüse,
Fig. 8 Schematische Umlaufdarstellung einer zweiten Ausführung zum Anbringen von Klebstellen zwischen Gebinden mittels unterschiedlicher Beschleunigung erster und zweiter Gebinde,
Fig. 9 Detail zur zweiten Ausführung gemäß Fig. 8,
Fig. 10 Schematische Ablaufdarstellung einer dritten Ausführung zum Anbringen von Klebstellen und des Fügens von Gebinden mittels kuppelförmiger Hubvorrichtung.

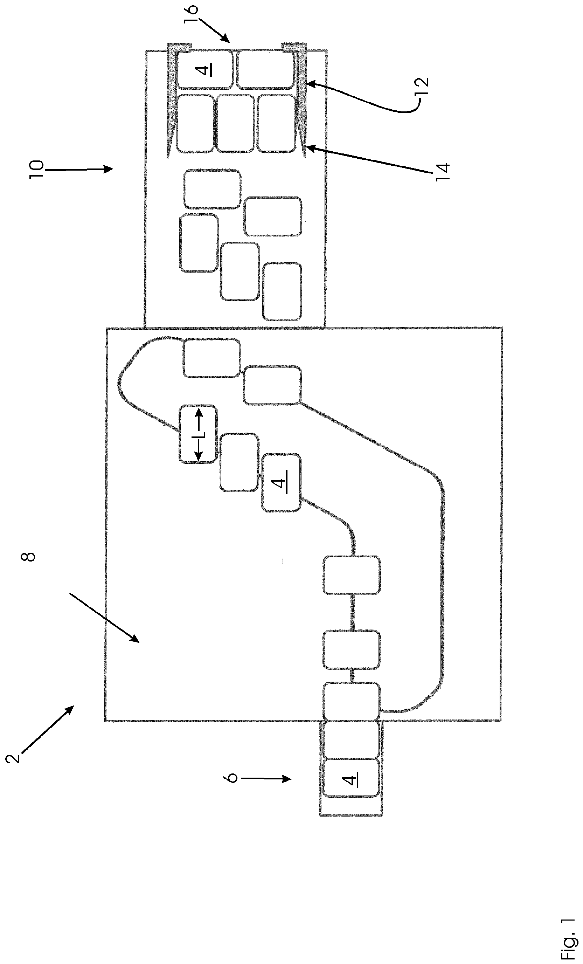

Fig. 1 zeigt eine Anlage 2 zum Vorgruppieren von Gebinden 4. Die Gebinde 4 werden über eine Zuführung 6 zugeführt und, nach Ausrichten in einer Wendestation 8 einem Aufnahmebereich 10 zugeführt. In der Wendestation 8 werden die Gebinde 4 in der Folge der Zuführung ausgerichtet. Fig. 1 zeigt das Vorgruppieren von Gebinden in wechselnder Anordnung. Die rechteckigen Gebinde 4 werden in Reihen, jedoch mit wechselnder Längsrichtung L im Aufnahmebereich 10 angeordnet. Zu diesem Zweck werden sie mit an sich bekannten Mitteln zum Drehen in der Wendestation 8 ausgerichtet und in den Aufnahmebereich 10 gefördert. Im Aufnahmebereich 10 ist eine Aufnahme 12 angeordnet, die über einen sich verjüngenden Eingangsabschnitt 14 die Gebinde 4 einer Lage 16 mindestens zum Teil, bevorzugt aber vollständig aufnimmt. Die Aufnahme 12 ist so bemessen, dass die darin aufgenommenen Gebinde 4 sich nicht mehr soweit relativ zueinander verdrehen können, dass sich die Längsausrichtung L eines Gebindes 4 ändert. Die Aufnahme 12 muss also keinen Druck auf die Gebinde 4 ausüben, sie kann im Abstand von den Gebinden, also mit Spiel angeordnet sein. Die Gebinde4 sind nun in loser Verdichtung zueinander angeordnet, sie sind noch nicht miteinander verbunden sondern lediglich vorgruppiert, meist zu einer quadratischen oder rechteckigen Lage 16 von Gebinden 4.

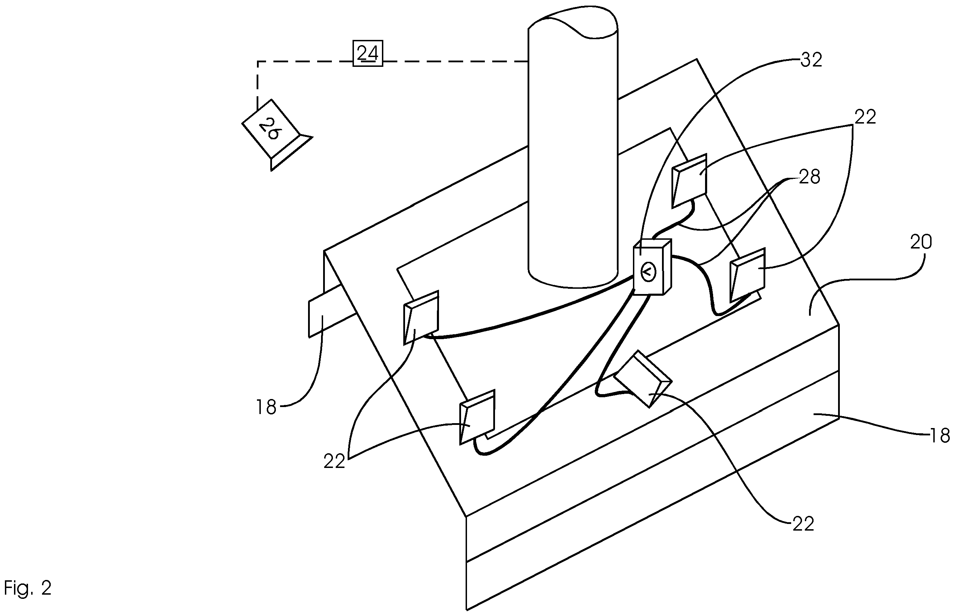

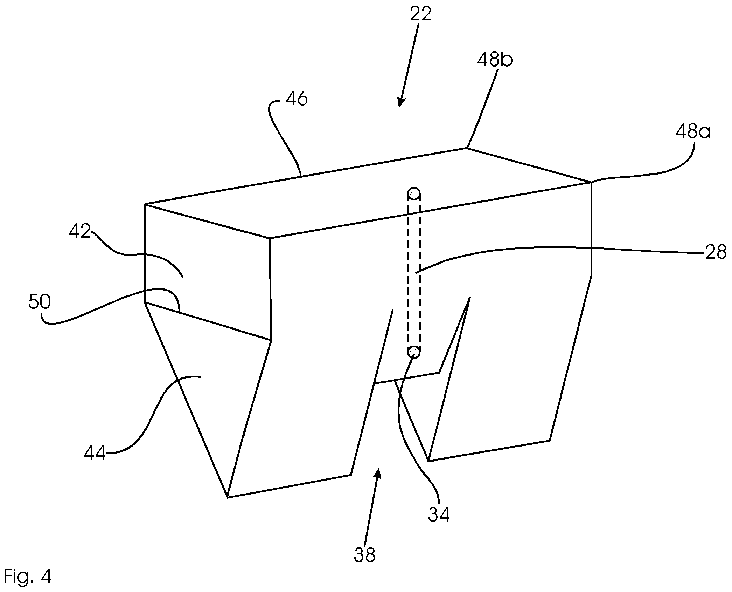

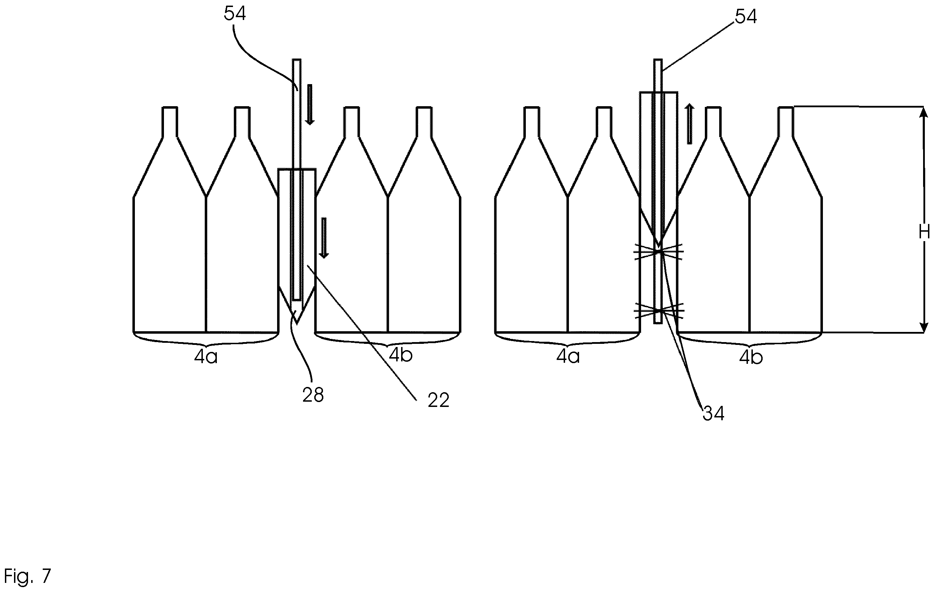

Fig. 2 zeigt eine Vorrichtung zum Anbringen von Klebstellen zwischen Gebinden nach einer ersten Ausführung der Erfindung, also unter Einsatz von Distanzelementen, hier von Trennkeilen 22. Fig. 2 zeigt eine Führung 18, hier als ortsfeste Schiene ausgebildet. Die Führung 18 kann aber auch als Leiste oder beweglich z.B. als Greifer bzw. als Gruppe von Greifern ausgebildet sein. Die vorgruppierte Lage 16 wird durch an sich bekannte Fördermittel (Bänder, Rollenbahnen) in dem Bereich der Führung 18 unter einem Tragrahmen 20 positioniert. Der Tragrahmen 20 trägt Trennkeile 22, die in x-y-z-Richtung beweglich sind. Die Trennkeile 22 werden durch eine Steuerung 24 gesteuert, wobei die Steuerung 24 sich nach einer optischen Erfassung der vorgruppierten Lage 16 mittels bspw. einer Kamera 26 richtet. Die Trennkeile 22 weisen einen in Fig. 4 und 7 näher dargestellten Klebstoffkanal 28 auf, der jeweils über eine flexible Zuleitung 30 mit einem Klebstoffvorrat 32 verbunden ist. Die Trennkeile 22 werden je nach Anordnung der zu verbindenden Gebinde 4 durch die Steuerung 24 oberhalb der Gebinde 4 so positioniert, dass die Trennkeile 22 beim Absenken zwischen die Gebinde diese jeweils Spreizen. Nach dem Anbringen von Klebstoff durch die am Ende des Klebstoffkanals angebrachten Düsen 34 an einem oder mehreren Gebinden werden die Gebinde zu einer Lage 16 gefügt, wobei aus den aufgebrachten Klebepunkten Klebstellen werden, die die Gebinde 4 zu einer Lage 16 verbinden. Der Tragrahmen 20 kann entweder, bezogen auf die Bewegungsrichtung der Gebinde 4, ortsfest angebracht sein oder er kann beweglich angebracht sein, wenn z. B. die Gebinde 4 unmittelbar nach dem Entfernen der Trennkeile 22 durch Mittel zum Fügen unter Druck gefügt werden, z. B. indem die Führung 18 oder andere an sich bekannte Mittel zum Fügen Druck auf die vier Seiten der vorgruppierten Lage 16 einwirken. Bei dieser Ausführung kann der Tragrahmen 20 dann z.B. in eine zweite Position überführt werden, um eine zweite Gruppe vorgruppierter Gebinde 4 zu spreizen und mit Klebepunkten zu versehen. Bevorzugt werden aber die vorgruppierten Gebinde zu einer angrenzenden Fügevorrichtung überführt.

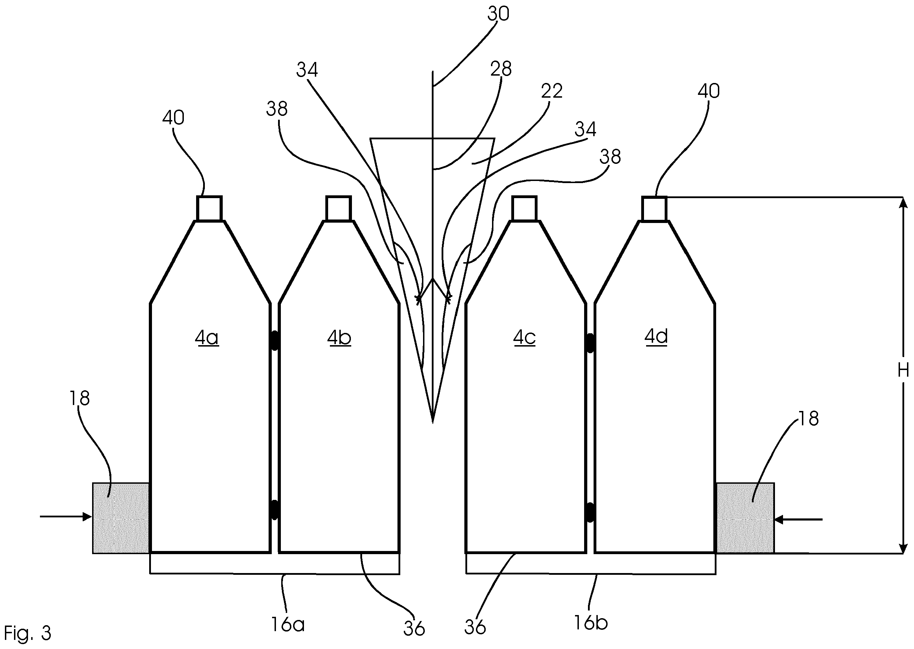

Fig. 3 zeigt ein Detail des Spreizens und Aufbringens von Klebepunkten nach der ersten Ausführung der Erfindung. Zwei Gebinde 16a, 16b sind nebeneinander angeordnet und werden durch Führungen 18, hier als Leisten ausgebildet, in ihrer Position seitlich fixiert. Die Führung 18 übt Druck auf die unteren Enden 36 der Behälter 4a, 4b und 4c, 4d aus.

Der Trennkeil 22 weist eine von oben nach unten zulaufende, also typische Keilform auf, kann aber auch als Parallelspreizer ausgeführt sein. Er ist von einem Klebstoffkanal 28 durchsetzt, z. B. entweder als Bohrung ausgeführt oder durch Einlegen eines Schlauchs in eine Bohrung im Trennkeil 22. Am Ende des Klebstoffkanals 28 sind Düsen 34 angeordnet, die durch Sprühen Klebstoff auf das oder die jeweils angrenzenden Gebinde 4b, 4c auftragen und so dass ein Klebepunkt erzeugt wird. Bevorzugt ist am Trennkeil 22 im Bereich der Düsen 34 eine Aussparung 38 angebracht, die Raum für die Düsen 34 innerhalb der Kontur des Trennkeils 22 schafft.

Fig. 3 zeigt einen Trennkeil 22, der sich zwischen die Gebinde 4a und 4b senkt und dabei die Gebinde 4a und 4b vom oberen Ende 40 her spreizt. Die Gebinde 4a und 4b weichen nicht in voller Höhe seitlich aus, da die unteren Enden 36 durch die Führung 18 zusammengehalten werden. Die unteren Enden 36 der Gebinde 4a, 4b liegen nach wie vor aneinander an. Die Düsen 34 sind am Trennkeil 22 im unteren Bereich in einer Höhe angeordnet, dass sie einen Klebepunkt auf aneinander anliegende Abschnitte der Gebinde 4 anbringen können, bezogen auf die Höhe H der Gebinde meist im mittleren bis oberen Bereich der Gebinde 4.

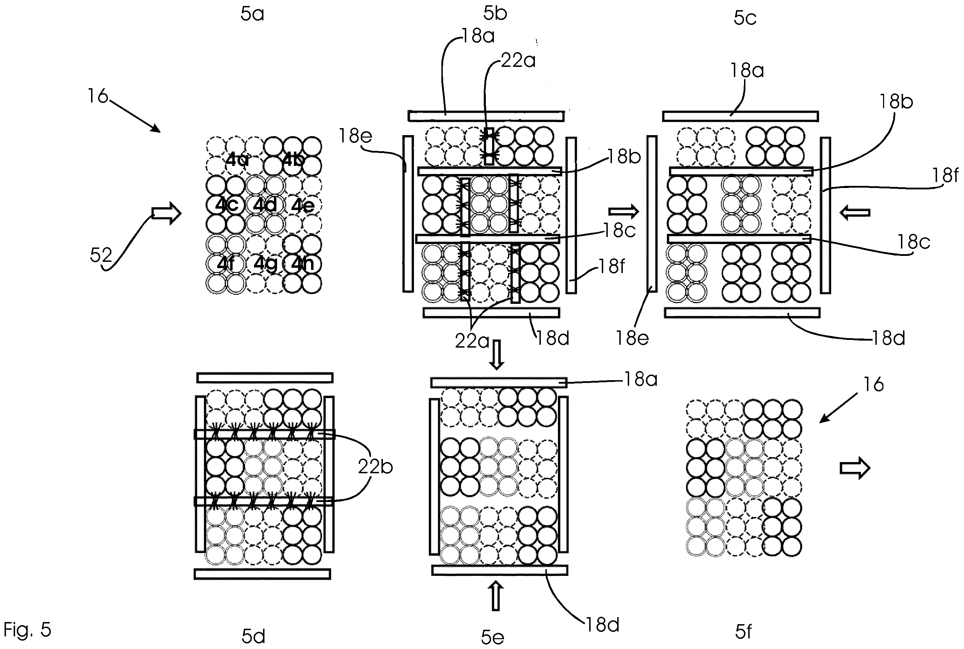

Fig.4 zeigt eine Ausführung für einen Trennkeil 22, bei der der Trennkeil 22 ausgehend von einem oberen, quaderförmigen Abschnitt 42 nach unten in einen keilförmigen, spitz zulaufenden Abschnitt 44 übergeht. Der Trennkeil 22 weist eine Länge 46 auf, die in etwa der Länge eines Gebindes 16 beträgt, vorzugsweise ein Mehrfaches der Länge eines Gebindes 4, so wie z. B. in Fig. 5 dargestellt. Der Trennkeil 22 kann aus jedem Werkstoff gefertigt werden, der geeignet ist, ein Spreizen der Gebinde 4 zu ermöglichen. Üblich sind Trennkeile 22 aus Metall oder aus Kunststoff.

Der Trennkeil 22 gemäß Fig. 4 weist eine Aussparung 38 auf, die in Form eines Rücksprungs ausgebildet ist. In der Aussparung 38 kann die Düse 34 optimal zum Aufbringen eines Klebepunkts auf ein Gebinde 4 ausgerichtet werden. Die Düse 34 wird über einen Klebstoffkanal 28 im Inneren oder außen am Trennkeil 22 mit Klebstoff versorgt, vorzugsweise mit einem niedrigviskosen Klebstoff, z. B. Heißleim, der aus dem Klebstoffvorrat 32 über Zuleitungen 30 zugeführt wird. Ein Trennkeil 22 kann bei Bedarf mehrere Düsen 34 und ggf. auch mehrere Klebstoffkanäle 28 aufweisen, um in einem Arbeitsgang sämtliche zwischen den jeweiligen Gebinden vorgegebenen Klebepunkte erzeugen zu können. Die Düsen 34 können in unterschiedlicher Höhe, aber auch parallel über die Länge 46 des Trennkeils 22 angeordnet sein. Die Düsen 34 sind, bezogen auf die Länge 46 des Trennkeils 22 bevorzugt auf beiden Seiten 48a, 48 b des Trennkeils angeordnet, um gegenüberliegende Gebinde mit Klebepunkten zu versehen. Der Trennkeil 22 ist zum Spreizen der Gebinde in der Höhe verschieblich, er kann insbesondere mit ausreichendem Druck zum Spreizen der Gebinde 4 zwischen diese abgesenkt werden. Die Breite 50 des Trennkeils 22 ist so bemessen, dass durch Spreizen ein ausreichender Abstand zwischen den oberen Enden der Gebinde 4 erreicht wird, damit Klebepunkte an vorgesehenen Stellen der Gebinde 4 aufgetragen werden können.

Fig. 5 zeigt eine Folge von Schritten des Spreizens, des Anbringens von Klebepunkten an Gebinden und des Fügens zuerst in Fig. 5a-5c in Förderrichtung gemäß Pfeil 52, dann in Fig. 5d-5f senkrecht zur Förderrichtung. Fig. 5a zeigt eine Lage 16 aus lose verdichteten, vorgruppierten Gebinden 4a bis 4h, die in wechselnder Anordnung ausgerichtet sind. Die Gebinde 4a bis 4h weisen jeweils sechs durch Klebstellen verbundene Behälter auf und sind in der Zeichnung durch unterschiedliche Konturen dargestellt. Die Gebinde 4a, 4b liegen mit den Stirnseiten, also in Längsrichtung aneinander an. Die Gebinde 4c, d, e liegen mit den Stirnseiten an den Gebinden 4a, b an, parallel zu den Gebinden 4c, d, e sind die Gebinde 4f, g, h ausgerichtet. Die Gebinde 4a-h der Lage 16 sind damit zwar in Reihen, aber doch in unterschiedlicher Ausrichtung zueinander angeordnet.

Fig. 5b zeigt die Lage 16, nun gehalten durch Führungen 18a-f, wobei die Führungen 18a bis 18d parallel zueinander und parallel zur Förderrichtung angeordnet sind und wobei die Führungen 18e und 18f senkrecht zur Förderrichtung gemäß Pfeil 52 angeordnet sind. Die Führungen 18a und 18d sind neben den äußeren Gebinden 4a, 4b und 4f, 4g und 4h angeordnet, die Führung 18b ist zwischen den Gebinden 4a, 4b auf der einen Seite und 4c, 4d, 4e auf der anderen Seite angeordnet, die Führung 18c zwischen den Gebinden 4c, 4d und 4e auf der einen Seite und den Gebinden 4f, 4g und 4h auf der anderen Seite. Trennkeile 22a mit Düsen 34, die senkrecht zur Förderrichtung nach Pfeil 52 ausgerichtet sind, werden zwischen die Gebinde abgesenkt, spreizen sie und bringen Klebepunkte auf Gebinden an. Die Trennkeile 22a werden dann angehoben und die Führungen 18e, 18f werden wie in Fig. 5c dargestellt, aufeinander zu bewegt. Sie drücken die Gebinde in Förderrichtung gemäß Pfeil 52 aneinander an, um sie durch Aushärten oder Abbinden der Klebepunkte zu fügen. Nach dem Fügen werden die Führungen 18b und 18c entfernt, z. B. entweder abgesenkt oder nach oben entfernt.

Die so bereits teilweise zu einer Lage gefügten Gebinde werden nun - was bevorzugt wird- entweder mittels der Führungen 18 zu einer weiteren Anordnung mit Trennkeilen 22b bewegt oder eine zweite Gruppe von Trennkeilen 22b, ebenfalls mit Düsen 34 und parallel zur Förderrichtung nach Pfeil 52 ausgerichtet, senkt sich zwischen die Gebinde 4, ein erster Trennkeil 22b zwischen die Gebinde 4a, 4b auf der einen Seite und Gebinde 4c, 4d und 4e auf der anderen Seite, ein zweiter Trennkeil 22b senkt sich zwischen Gebinde 4c, 4d und 4e auf der einen Seite und Gebinde 4f, 4g und 4h auf der anderen Seite. Nach dem Herausziehen der Trennkeile 22b nach oben (dargestellt in Fig. 5e) werden die Führungen 18a und 18d aufeinander zu bewegt und fügen durch den Druck, den die Führungen 18 auf die Gebinde 4 ausüben, die Gebinde 4 zur Lage 16. Bei der Lage 16, so wie sie in Fig. 5f dargestellt ist, sind sämtliche Gebinde 4 untereinander durch Klebstellen verbunden. Die Lage 16 kann nun mit anderen Lagen zu einem Stapel geschichtet werden. Eine Umreifung oder Umhüllung des Stapels mit Folie, insbesondere Schrumpffolie, ist nur noch in geringem Ausmaß erforderlich. Damit wird eine beträchtliche Menge Verpackungsmaterial eingespart.

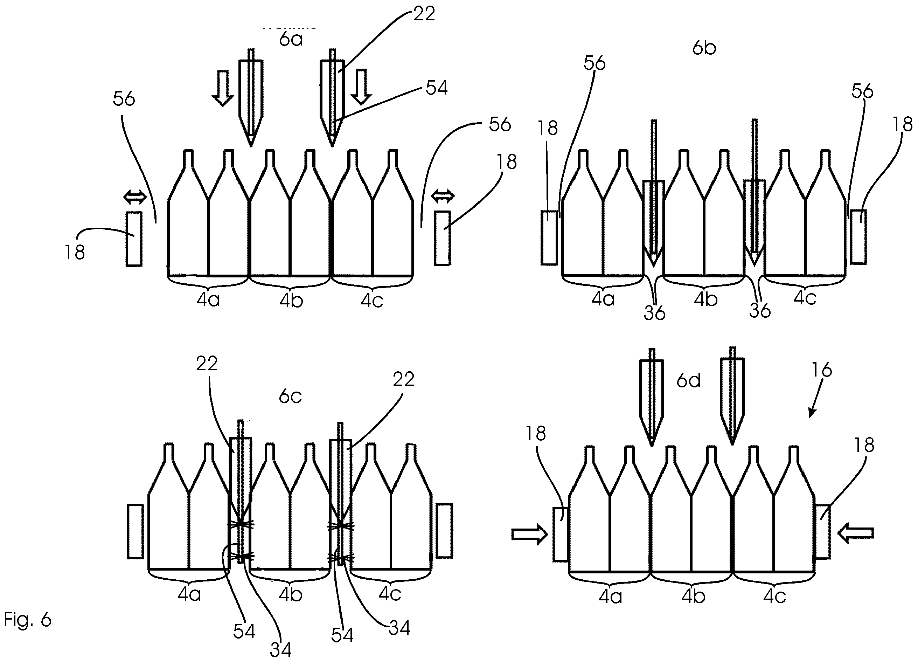

Fig. 6 zeigt eine vorteilhafte Ausgestaltung der ersten Ausführung der Erfindung. In den Klebstoffkanal 28 des Trennkeils 22 ist eine Klebstoffleitung 54 eingesetzt, an deren unterem Ende Düsen 34 angebracht sind, bevorzugt Düsen zu unterschiedlichen Seiten und/oder in unterschiedlicher Höhe der Klebstoffleitung 54. Die Klebstoffleitung 54 ist gegenüber dem Trennkeil 22 im Klebstoffkanal 28 verschieblich. Die lose vorverdichteten Gebinde 4 sind in einer Führung 18 angeordnet, die im Abstand zu den Gebinden 4 angeordnet ist. Zwischen den Gebinden 4 und oberhalb davon sind Trennkeile 22 angeordnet, die Klebstoffleitungen 54 aufweisen. Gemäß Fig. 6b werden die Trennkeile 22 zwischen die Gebinde 4a, 4b und 4c gesenkt und spreizen diese. Die Gebinde 4a und 4c werden dadurch nach außen verschoben bis sie in Anlage an die Führungen 18 kommen. Der in Fig. 6a noch große Abstand 56 zwischen Führungen und Gebinde ist nach Absenken der Trennkeile 22 minimiert. Nach maximaler Spreizung der Gebinde 4 werden -wie in Fig. 6c und insbesondere Fig. 7 gezeigt- die Trennkeile 22 ein Stück nach oben zurückgezogen und jeweils eine Klebstoffleitung 54 wird aus einem Trennkeil 22 nach unten herausgefahren. Ist die Klebstoffleitung 54 voll ausgefahren, tritt Klebstoff aus den Düsen 34 aus und erzeugt Klebepunkte auf den Gebinden. Fig. 6c - und die Detailzeichnung Fig. 7 - zeigen deutlich, dass mit dieser Variante der ersten Ausführung, bezogen auf die Höhe H der Gebinde, vorteilhaft auch Klebepunkte im unteren und mittleren Bereich der Gebinde erzeugt werden können. Nach dem Erzeugen der Klebepunkte werden die zuerst die Klebstoffleitung 54 wieder in den Klebstoffkanal 28 zurückgezogen, dann werden die Trennkeile 22 angehoben. Danach werden die Führungen 18 auf die Gebinde 4 zu bewegt und pressen diese aneinander an (Fig. 6d), so dass eine Lage 16 von untereinander verbundenen Gebinden 4 entsteht.

Sämtliche Abläufe, die das Bewegen der Trennkeile 22 und das Betätigen der Düsen 34 betreffen, werden von der Steuerung 24 überwacht, gesteuert und/oder geregelt.

Aus den Fig. 1 bis 7 wird deutlich, dass das Fügen der Gebinde zu einer Lage erfindungsgemäß möglich ist, auch wenn die Gebinde in wechselnder Anordnung ausgerichtet sind und ohne die Klebepunkte zu beschädigen oder die Vorrichtung zu verschmutzen. Im Weiteren werden nun alternative Vorrichtungen und ihre Funktion beschrieben, die diese Aufgabe in gleicher Weise lösen.

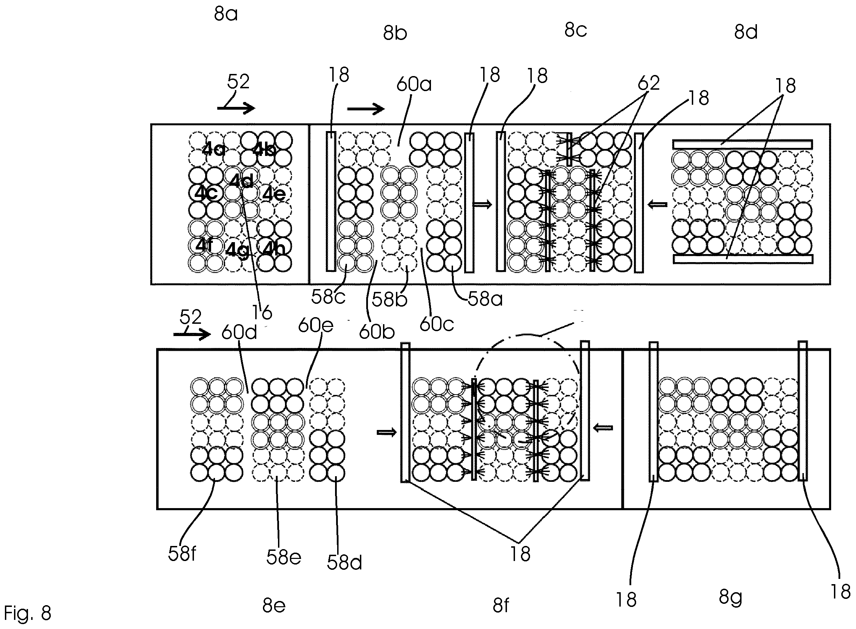

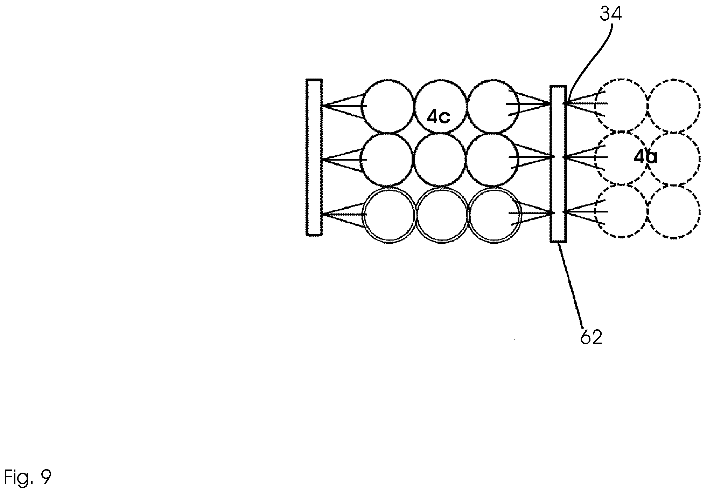

Fig. 8 zeigt in schematischer Darstellung eine zweite Ausführung der Erfindung; ein Detail D aus Fig. 8 ist in Fig. 9 dargestellt. Gebinde 4a bis 4h sind in loser Verdichtung zu einer Lage 16 in wechselnder Anordnung vorgruppiert, so wie bereits in Fig. 5 dargestellt. Gleiche Bezugszeichen benennen gleiche Bauteile bzw. Elemente wie zur ersten Ausführungsform verwendet. Vor und hinter der Lage 16 aus vorgruppierten Gebinden wird je eine Führungsschiene 18 angeordnet (Fig. 8b). Die vorgruppierten Gebinde 4 werden auf einem Rollengang, einem Band oder Kettenförderer gefördert (hier nicht im Detail dargestellt), dessen Rollen die Gebinde abschnittsweise unterschiedlich beschleunigen. Eine erste Reihe 58a von Gebinden 4b, 4e und 4h wird durch die Rollen am meisten beschleunigt und liegt an der in Richtung des Pfeils 52 vorderen Führung 18 an. Eine mittlere Reihe 58b Lage 16 von Gebinden 4d und 4g wird weniger schnell beschleunigt als die erste Reihe 58a, aber mehr als die letzte Reihe 58c, die ggf. nicht beschleunigt wird. Durch die unterschiedliche Beschleunigung entstehen Lücken 60 zwischen den Reihen 58a bis 58c der Lage 16. In diese Lücke 60 fahren Düsenträger 62 zwischen die Reihen 58a bis 58c. Die Düsenträger 62 können als Trennkeile 22 ausgebildet sein, erforderlich ist dies jedoch nicht. Ein Düsenträger 62 können in einer einfachen Ausführung als Rohr ausgebildet sein, deren Längen etwa der Länge eines Gebindes oder des Mehrfachen eines Gebindes entspricht, wobei das Rohr eine oder mehrere Düsen 34 zum Auftragen von Klebstoff auf Gebinde aufweist (vgl. Fig. 9). Der Düsenträger 62 ist beweglich angeordnet, vergleichbar dem zuvor im Zusammenhang mit den Fig. 2 bis Fig. 7 beschriebenen Trennkeil 22. Der Düsenträger 62 kann ebenfalls an einem Tragrahmen 20 angebracht und an einen Klebstoffvorrat 32 angeschlossen sein.

Lediglich die Form des Düsenträgers 62 kann einfacher ausgebildet sein. Nach dem Auftragen der Klebepunkte auf die Gebinde wird der Düsenträger 62 aus den Lücken 60a bis 60c nach oben herausgefahren und die Führungen 18 werden auf die Gebinde zu bewegt, um durch Erzeugen von Klebstellen aus Klebepunkten die Gebinde zu einer Lage zu verbinden.

Nach diesem ersten Fügen der Gebinde wird die Lage, so wie durch den Pfeil 64 angedeutet, um 90° gedreht und weiter gefördert auf einen zweiten Abschnitt mit Rollen erster, zweiter und dritter Beschleunigung, wobei das Ausmaß der Beschleunigung von der ersten zur dritten Beschleunigung abnimmt. Eine erste Reihe 58d wird hoch beschleunigt, so dass eine Lücke 60d zu einer zweiten Reihe 58e mittlerer Beschleunigung entsteht. Zwischen der zweiten Reihe 58e und der kaum beschleunigten Reihe 58f entsteht eine Lücke 60e. In die Lücken 60d und 60e senken sich Düsenträger 62 und bringen über Düsen 34 Klebepunkte auf die Seiten der Gebinde auf, die bisher noch nicht untereinander verbunden waren (Fig. 8f). Wie in 8e gezeigt, werden nach dem Entfernen der Düsenträger 62 durch Anpressen der Gebinde aneinander mittels der Führungen 18 aus den Klebepunkten Klebstellen zum Verbinden der Gebinde. Damit ist auch nach der zweiten Ausführung der Erfindung eine Lage aus untereinander durch Klebstellen verbundenen Gebinden hergestellt worden.

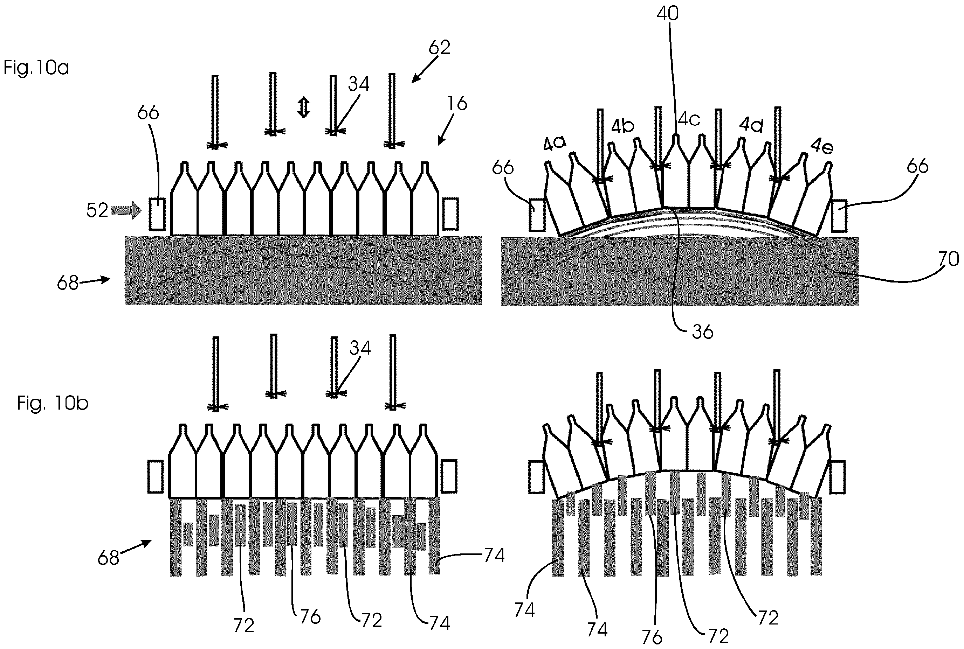

Fig. 10 zeigt zwei Alternativen einer dritten Ausführung der Erfindung. Lose vorverdichtete Gebinde 4 werden in einem Zentrierrahmen 66, der auch als Führung dient, über einer Hubvorrichtung 68 angeordnet. Oberhalb der Gebinde 4 sind Düsenträger 62 angeordnet. Im Betrieb hebt sich nach einer ersten Variante der Erfindung eine kuppelförmige Platte 70 aus der Hubvorrichtung 68, wobei die mittig oder zentral angeordneten Gebinde 4b bis 4d am meisten angehoben werden. Durch das unterschiedliche Anheben der Gebinde, je nach Position in der vorgruppierten Lage 16 werden die Gebinde 4a - 4e in ihrer Ausrichtung zueinander gespreizt. Damit die Gebinde ihre Ausrichtung zueinander beibehalten, werden die Gebinde vom Zentrierrahmen 66 zusammengehalten. Düsenträger 62 werden zwischen die gespreizten Gebinde 4 abgesenkt und tragen wie vorstehend z.B. im Zusammenhang mit den Fig. 2 bis 8 beschrieben, Klebepunkte auf Gebinde auf. Nach dem Auftragen der Klebepunkte wird die kuppelförmige Platte 70 wieder abgesenkt und die Gebinde werden (hier nicht dargestellt) durch Aufbringen von Druck, z. B. durch den Zentrierrahmen 66 oder durch Pressbalken oder-platten oder andere geeignete und an sich bekannte Mittel zu einer Lage 16 gefügt.

Die kuppelförmige Platte 70 kann nur einer Richtung, z. B. in Förderrichtung, gebogen sein. Bevorzugt ist die kuppelförmige Platte 70 jedoch in zwei Richtungen gebogen. In der einfachen Ausführung, also nur in einer Richtung gebogen, werden die Gebinde 4 nur quer Biegung gespreizt, so dass sich keilförmig oder parallele Lücken zwischen den Gebinden öffnen. In der bevorzugten Ausführung entstehen gleichzeitig Lücken zwischen allen Gebinden, unabhängig von der Ausrichtung der Gebinde 4 in der Lage 16. In der einfachen Ausrichtung sind in der Regel zwei Hubvorgänge mit unterschiedlicher, typischerweise um 90° gedrehter Lage erforderlich, um sämtliche Gebinde 4 zu einer Lage 16 zu verbinden. In der bevorzugten Ausführung mit schalen- oder kuppelförmiger Platte 70 können sämtliche Gebinde in einem Arbeitsgang miteinander verbunden werden.

Die Hubvorrichtung 68 spreizt die Gebinde in der Weise, dass die unteren Enden 36 der Gebinde näher aneinander angrenzen bzw. sich berühren, während die oberen Enden 40 der Gebinde gespreizt sind. Dadurch werden Klebepunkte vorzugsweise in der oberen Hälfte der Gebinde, also näher zum oberen Ende der Gebinde erzeugt.

Nach einer zweiten Alternative der dritten Ausführungsform (Fig. 10 b) ist die Hubvorrichtung 68 in der Weise ausgelegt, dass unterhalb der Gebinde mehrere Hubstempel 72 in Aufnahmen 74 gehoben und gesenkt werden können. Die Hubstempel 72 sind entweder, bezogen auf eine gleiche Unterkante 76, unterschiedlich lang, wobei die längsten Hubstempel 72 in der Mitte unter der Lage 16 angeordnet sind, und die kürzesten Hubstempel 72 am Rand unter der Lage angeordnet sind. Dabei wirkt mindestens ein Hubstempel 72 auf ein Gebinde ein, bevorzugt mehr als ein Hubstempel 72, so, wie in Fig. 10b dargestellt. Sind die Gebinde 4 im Zentrierrahmen 66 über der Hubvorrichtung 68 angeordnet, werden die Hubstempel 72 angehoben, so dass die darauf angeordneten Gebinde 4 gespreizt werden, indem die in der Mitte der Lage angeordneten Gebinde am höchsten angehoben werden und die benachbarten Gebinde auf unterschiedlich hohen Hubstempeln 72 in Schräglage geraten, so dass sich Lücken insbesondere zwischen den oberen Enden der Gebinde öffnen, in die Düsenträger 62 dann abgesenkt werden können, um in der vorstehend beschriebenen Weise Klebepunkte auf die Gebinde aufzutragen, die, nach dem Herausziehen der Düsenträger 62 durch Mittel zum Fügen wie vorstehend im Zusammenhang mit Fig. 10a beschrieben, zu Klebstellen gefügt werden können, um aus den Gebinden die gewünschte, erfindungsgemäße Lage zu erzeugen.

Auch bei der in Fig. 10b gezeigten Ausführung können die Hubstempel 72 in Reihen mit gleicher Höhe angeordnet sein, um reihenförmige Lücken zwischen den Gebinden entstehen zu lassen. Alternativ - und bevorzugt- nimmt die Höhe der Hubstempel 72 konzentrisch von der Mitte zum Rand - also in Richtung auf den Zentrierrahmen 66 - ab, so dass in einem Hubvorgang Lücken zwischen sämtlichen Gebinden erzeugt werden können.

Nach einer bevorzugten Ausführung weisen die Düsenträger 62 eine oder mehrere Düsen 34 am unteren Ende des Stabes auf, der in die Lücken zwischen den Gebinden gesenkt werden kann. Diese Ausführung ist insbesondere zum Aufbringen von Klebepunkten bei der dritten Ausführung der Erfindung gemäß Fig. 10 geeignet, in die verhältnismäßig kleinen Lücken zwischen den Gebinden abgesenkt zu werden.

### Bezugszeichenliste

- D: Detail
- H: Höhe des Gebindes
- L: Längsrichtung des Gebindes
- 2: Anlage zum Vorgruppieren von Gebinden
- 4: Gebinde
- 6: Zuführung
- 8: Wendestation
- 10: Aufnahmebereich
- 12: Aufnahme
- 14: Eingangsabschnitt
- 16: Lage
- 18: Führung
- 20: Tragrahmen
- 22: Trennkeile
- 24: Steuerung
- 26: Kamera
- 28: Klebstoffkanal
- 30: Zuleitungen
- 32: Klebstoffvorrat
- 34: Düsen des Klebstoffkanals
- 36: untere Enden der Behälter
- 38: Aussparung am Trennkeil
- 40: oberes Ende der Gebinde
- 42: quaderförmiger Abschnitt des Trennkeils
- 44: keilförmiger Abschnitt des Trennkeils
- 46: Länge des Trennkeils
- 48a, b: Seiten des Trennkeils
- 50: Breite des Trennkeils
- 52: Pfeil
- 54: Klebstoffleitung
- 56: Abstand Führung-Gebinde
- 58: Reihen von Gebinden
- 60: Lücke
- 62: Düsenträger
- 64: Pfeil (Rotation)
- 66: Zentrierrahmen
- 68: Hubvorrichtung
- 70: kuppelförmige Platte
- 72: Hubstempel
- 74: Aufnahmen
- 76: Unterkante

## Patentansprüche

1. Verfahren zum Herstellen einer Lage (16) aus Gebinden (4), wobei die Gebinde (4) miteinander verbundene, insbesondere klebend verbundene Behälter aufweisen und wobei die Lage (16) mindestens ein erstes und ein zweites Gebinde (4) aufweist, mit den Schritten:
- Bereitstellen eines ersten und eines zweiten Gebindes (4), die in einer ersten, insbesondere loseren Verdichtung zu einer Lage (16) vorgruppiert sind, in einem Aufnahmebereich (10)
- finales Verdichten der vorgruppierten Gebinde (4) zu einer Lage (16) wobei
- vor dem finalen Verdichten der Gebinde (4) zu einer Lage (16) ein Klebepunkt auf mindestens ein erstes Gebinde (4) aufgebracht wird, und
- während oder nach dem Bereitstellen der vorgruppierten Gebinde (4), aber vor dem finalen Verdichten mindestens ein Klebepunkt aufgetragen wird, durch den beim finalen Verdichten der vorgruppierten Gebinde (2) zu einer Lage (16) eine Klebstelle zwischen zwei aneinander grenzenden Gebinden (4) erzeugt wird, **dadurch gekennzeichnet, dass**
die in loser Verdichtung vorgruppierten ersten und zweiten Gebinde (4) gespreizt werden und dass in gespreiztem Zustand ein Klebepunkt auf das erste Gebinde (4) aufgebracht wird.

2. Verfahren nach Anspruch 1, **dadurch gekennzeichnet, dass** der Klebepunkt aus Klebstoff erzeugt wird, wobei bevorzugt strahlungshärtender Klebstoff, Heiß-Schmelzleim oder ein beidseitig klebendes Band zum Erzeugen des Klebepunkts eingesetzt werden.

3. Verfahren nach Anspruch 1 oder 2, wobei die in der ersten, losen Verdichtung vorgruppierten Gebinde (4) in Reihen oder in wechselnder Ausrichtung angeordnet sind.

4. Verfahren nach mindestens einem der vorangehenden Ansprüche, **dadurch gekennzeichnet, dass** zum Spreizen der ersten und zweiten Gebinde (4) ein Trennkeil (22) zwischen die Gebinde (4) eingeführt wird, und dass während der Trennkeil oder Parallelspreizer (22) zwischen dem ersten und dem zweiten Gebinde (4) im Eingriff ist, Klebstoff auf das erste Gebinde (4) aufgebracht wird.

5. Verfahren nach Anspruch 4, **dadurch gekennzeichnet, dass** mehrere Trennkeile (22) oder Spreizer nacheinander oder gleichzeitig zwischen den vorgruppierten Gebinden (4) einer Lage eingeführt werden.

6. Verfahren nach Anspruch 5, **dadurch gekennzeichnet, dass** nach dem Einführen und Ausfahren einer ersten Gruppe von Trennkeilen (22) und vor dem Einführen einer zweiten Gruppe von Trennkeilen (22) die Lage aus in loser Verdichtung vorgruppierten Gebinden (4) gedreht wird.

7. Verfahren nach mindestens einem der Ansprüche 4 bis 6, **dadurch gekennzeichnet, dass** der Trennkeil (22) verfahrbar ist.

8. Verfahren nach mindestens einem der Ansprüche 1 bis 3, **dadurch gekennzeichnet, dass** die lose verdichteten, vorgruppierten ersten und zweiten Gebinde (4) in einem Zentrierrahmen (66) angeordnet sind, und dass eine unterhalb der Gebinde (4) angeordnete, kuppelförmige Hubvorrichtung (68) die ersten und zweiten Gebinde (4) anhebt, wobei während oder nach dem Anheben der ersten und zweiten Gebinde (4) ein Klebepunkt auf das erste Gebinde (4) aufgetragen wird.

9. Verfahren nach mindestens einem der Ansprüche 1 bis 3, **dadurch gekennzeichnet, dass** erste und zweite Gebinde (4) in loser Verdichtung vorgruppiert sind oder vorgruppiert werden, dass das erste Gebinde (4) und das zweite Gebinde (4) differenziert beschleunigt werden, und dass im Zustand der differenzierten Beschleunigung ein Klebepunkt auf das erste Gebinde (4) aufgebracht wird.

10. Verfahren nach mindestens einem der vorangehenden Ansprüche, **dadurch gekennzeichnet, dass** ausgewählte, insbesondere randständige Gebinde (4) oder sämtliche Gebinde (4) mit Klebepunkten versehen werden, wobei die Klebepunkte bevorzugt kleiner oder schwächer sind als Klebstellen, die die Behälter zu einem Gebinde (4) verbinden.

11. Verfahren nach mindesten einem der vorstehenden Ansprüche, **dadurch gekennzeichnet, dass** vor oder nach dem Fügen der Gebinde (4) zu einer ersten Lage (16) Klebstoff auf das obere Ende eines in einem Gebinde (4) fixierten Behälters aufgebracht wird, und dass auf diese Lage (16) eine zweite Lage (16) von Gebinden (4) oder eine bahnförmige Zwischenlage aufgebracht wird.

12. Vorrichtung zum Herstellen einer Lage aus Gebinden (4), wobei die Gebinde (4) untereinander verbundene, insb. klebend verbundene Behälter aufweisen, und wobei die Lage (16) mindestens ein erstes und ein zweites Gebinde (4) aufweist, mit
- Mitteln zum Fördern, Gruppieren und Ausrichten des mindestens ersten und des zweiten Gebindes (4) zu einer vorverdichteten Lage (16)
- Station zum finalen Verdichten der mindestens zwei Gebinde (4) zu einer Lage (16)
- Mitteln zum Aufbringen von Klebepunkten zwischen benachbarte Gebinde
- Mitteln zum Verdichten und Fügen der Gebinde (4) zu einer Lage (16), **dadurch gekennzeichnet, dass**
die Vorrichtung Mittel zum Spreizen des ersten und des zweiten Gebindes (4) aufweist, die zu einer vorverdichteten Lage (16) ausgerichtet sind.

13. Vorrichtung nach Anspruch 12, **dadurch gekennzeichnet, dass** die Mittel zum Spreizen als Trennkeil (22), Parallelspreizer oder als kuppelförmige Hubvorrichtung (68) oder als Mittel zum Erzeugen einer ersten Beschleunigung für ein erstes Gebinde (4) und zum Erzeugen einer zweiten Beschleunigung für ein zweites Gebinde (4) ausgelegt sind.

14. Vorrichtung nach Anspruch 12 oder 13, **dadurch gekennzeichnet, dass** mehrere Trennkeile (22) oder Mittel zum Erzeugen einer Beschleunigung vorgesehen sind.

15. Vorrichtung nach mindestens einem der Ansprüche 12 bis 14, **dadurch gekennzeichnet, dass** eine Hubvorrichtung (68) eine kuppelförmige Platte (70) oder einzelne Segmente aufweist, wobei die Segmente so ausgelegt sind, dass sie einzeln anhebbar sind, um eine kuppelförmige Fläche zu erzeugen.

16. Vorrichtung nach mindestens einem der Ansprüche 12 bis 15, **dadurch gekennzeichnet, dass** die Mittel zum Aufbringen von Klebepunkten zwischen benachbarte Gebinde Teil der Station zum Verdichten der Gebinde (4) sind oder im bestimmungsgemäßen Betrieb dort einsetzbar sind.

## Claims

1. Method for the production of a layer (16) of multipacks (4), wherein the multipacks (4) comprise containers which are connected to one another, in particular connected by adhesive, and wherein the layer (16) comprises at least one first and one second multipack (4), with the steps:
- providing a first and a second multipack (4), which are preliminarily grouped in a first somewhat loose compaction to form a layer (16), in a reception area (10),
- final compaction of the preliminarily grouped multipacks (4) to form a layer (16), wherein
- before the final compaction of the multipacks (4) to form a layer (16), an adhesive spot is applied onto at least one first multipack (4), and
- during or after the provision of the preliminarily grouped multipacks (4), but before the final compaction, at least one adhesive spot is applied, by means of which, at the final compaction of the preliminarily grouped multipacks (4) to form a layer (16), an adhesion point is produced between two adjacent multipacks (4),
**characterised in that**
- the first and second multipacks (4) preliminarily grouped in loose compaction are spread, and, in the spread state, an adhesive spot is applied onto the first multipack (4).

2. Method according to claim 1, **characterised in that** the adhesive spot is produced from adhesive, wherein preferably radiation-hardening adhesive, hot-melt adhesive, or a two-sided adhesive strip are used to produce the adhesion point.

3. Method according to claim 1 or 2, **characterised in that**, in the first loose compaction, preliminarily grouped multipacks (4) are arranged in rows or in alternating alignments.

4. Method according to at least one of the preceding claims, **characterised in that**, for the spreading of the first and second multipacks (4), a separation wedge (22) is introduced between the multipacks (4), and that, while the separation wedge or parallel spreader (22) is in engagement between the first and second multipack (4), adhesive is applied onto the first multipack (4).

5. Method according to claim 4, **characterised in that** several separation wedges (22) or spreaders are introduced one after another or simultaneously between the preliminarily grouped multipacks (4) of a layer.

6. Method according to claim 5, **characterised in that**, after the introduction and withdrawal of a first group of separation wedges (22), and before the introduction of a second group of separation wedges (22), the layer of loosely compacted preliminarily grouped multipacks (4) is rotated.

7. Method according to at least one of claims 4 to 6, **characterised in that** the separation wedge (22) can be moved by drive means.

8. Method according to at least one of claims 1 to 3, **characterised in that** the loose compacted preliminarily grouped first and second multipacks (4) are arranged in a centring frame (66), and that a dome-shaped lifting device (68), arranged beneath the multipack (4), lifts the first and second multipacks (4), while during or after the lifting of the first and second multipacks (4), an adhesive spot is applied onto the first multipack (4).

9. Method according to at least one of claims 1 to 3, **characterised in that** first and second multipacks (4) are preliminarily grouped in loose compaction, or are preliminarily grouped, that the first multipack (4) and the second multipack (4) are speeded up at different rates, and that, in the state of differentiated speeding up, an adhesive spot is applied onto the first multipack (4).

10. Method according to at least one of the preceding claims, **characterised in that** selected multipacks (4), in particular those at the periphery, or all the multipacks are provided with adhesive spots, wherein the adhesive spots are preferably smaller or weaker than the adhesion points which connect the containers to form a multipack (4).

11. Method according to at least one of the preceding claims, **characterised in that**, before or after the joining of the multipacks (4) to form a first layer (16), adhesive is applied onto the upper end of a container fixed in a multipack (4), and that applied onto this layer (16) is a second layer (16) of multipacks (4) or a strip-form intermediate layer.

12. Device for the production of a layer of multipacks (4), wherein the multipacks (4) comprise containers which are connected to one another, in particular connected by adhesive, and wherein the layer (16) comprises at least a first and a second multipack (4), with
- means for conveying, grouping, and aligning the at least first and the second multipacks (4) to form a preliminarily compacted layer (16),
- a station for the final compaction of the at least two multipacks (4) to form a layer (16),
- means for the application of adhesive spots between adjacent multipacks,
- means for compacting and joining the multipacks (4) to form a layer (16),
**characterised in that**
- the device comprises means for spreading the first and the second multipacks (4), which are aligned to form a preliminarily compacted layer (16).

13. Device according to claim 12, **characterised in that** the means for spreading are configured as a separation wedge (22), parallel spreader, or as a dome-shaped lifting device (68), or as means for incurring a first speeding up of a first multipack (4) and for incurring a second speeding up of a second multipack (4).

14. Device according to claim 12 or 13, **characterised in that** a plurality of separation wedges (22) or means for incurring speeding up are provided.

15. Device according to at least one of claims 12 to 14, **characterised in that** a lifting device (68) comprises a dome-shaped plate (70) or individual segments, wherein the segments are configured in such a way that they can be raised individually in order to produce a dome-shaped surface.

16. Device according to at least one of claims 12 to 15, **characterised in that** the means for applying adhesive spots between adjacent multipacks are a part of the station for compacting the multipacks (4), or can be put into use there in operation in accordance with the conditions.

## Revendications

1. Procédé de fabrication d'une couche (16) d'emballages (4), dans lequel les emballages (4) présentent des récipients reliés entre eux, en particulier reliés par collage et dans lequel la couche (16) présente au moins un premier et un deuxième emballage (4), avec les étapes de :
- mise à disposition d'un premier et d'un deuxième emballage (4), qui sont pré-groupés dans un premier compactage, en particulier plus lâche en une couche (16), dans une zone de réception (10),
- compactage final des emballages pré-groupés (4) en une couche (16) dans lequel
- avant le compactage final des emballages (4) en une couche (16), un point de colle est appliqué sur au moins un premier emballage (4), et
- pendant ou après la mise à disposition des emballages pré-groupés (4), mais avant le compactage final, au moins un point de colle est appliqué, par lequel lors du compactage final des emballages pré-groupés (4) en une couche (16), une zone de collage est générée entre deux emballages (4) adjacents l'un l'autre,
**caractérisé en ce que**
les premier et deuxième emballages pré-groupés (4) en compactage lâche sont écartés et qu'à l'état écarté un point de colle est appliqué sur le premier emballage (4).

2. Procédé selon la revendication 1, **caractérisé en ce que** le point de colle en colle est généré, dans lequel de la colle de préférence durcissable par rayonnement, de la colle thermofusible ou une bande adhésive double face sont utilisées pour générer le point de colle.

3. Procédé selon la revendication 1 ou 2, dans lequel les emballages pré-groupés (4) dans le premier compactage lâche sont agencés en rangées ou selon une orientation variable.

4. Procédé selon au moins l'une quelconque des revendications précédentes, **caractérisé en ce que** pour écarter les premier et deuxième emballages (4), une cale de séparation (22) est introduite entre les emballages (4), et que pendant que la cale de séparation ou l'écarteur parallèle (22) est en prise entre le premier et le deuxième emballage (4), de la colle est appliquée sur le premier emballage (4).

5. Procédé selon la revendication 4, **caractérisé en ce que** plusieurs cales de séparation (22) ou écarteurs sont introduits l'un après l'autre ou en même temps entre les emballages pré-groupés (4) d'une couche.

6. Procédé selon la revendication 5, **caractérisé en ce qu'**après l'introduction et la sortie d'un premier groupe de cales de séparation (22) et avant l'introduction d'un deuxième groupe de cales de séparation (22), la couche d'emballages pré-groupés (4) en compactage lâche est tournée.

7. Procédé selon au moins l'une quelconque des revendications 4 à 6, **caractérisé en ce que** la cale de séparation (22) est déplaçable.

8. Procédé selon au moins l'une quelconque des revendications 1 à 3, **caractérisé en ce que** les premier et deuxième emballages (4) pré-groupés, compactés de manière lâche sont agencés dans un cadre de centrage (66), et qu'un dispositif de levage (68) en forme de coupole, agencé sous les emballages (4) soulève les premier et deuxième emballages (4), dans lequel pendant ou après le soulèvement des premier et deuxième emballages (4), un point de colle est appliqué sur le premier emballage (4).

9. Procédé selon au moins l'une quelconque des revendications 1 à 3, **caractérisé en ce que** des premier et deuxième emballages (4) sont pré-groupés en compactage lâche ou sont pré-groupés, que le premier emballage (4) et le deuxième emballage (4) sont accélérés de manière différenciée, et qu'à l'état de l'accélération différenciée, un point de colle est appliqué sur le premier emballage (4).

10. Procédé selon au moins l'une quelconque des revendications précédentes, **caractérisé en ce que** des emballages (4) sélectionnés, en particulier marginaux ou tous les emballages (4) sont dotés de points de colle, dans lequel les points de colle sont de préférence plus petits ou plus faibles que des zones de collage, qui relient les récipients en un emballage (4).

11. Procédé selon au moins l'une quelconque des revendications précédentes, **caractérisé en ce qu'**avant ou après l'assemblage des emballages (4) en une première couche (16), de la colle est appliquée sur l'extrémité supérieure d'un récipient fixé dans un emballage (4) et que sur cette couche (16), une deuxième couche (16) d'emballages (4) ou une couche intermédiaire en forme de bande est appliquée.

12. Dispositif de fabrication d'une couche d'emballages (4), dans lequel les emballages (4) présentent des récipients reliés entre eux, en particulier reliés par collage, et dans lequel la couche (16) présente au moins un premier et un deuxième emballage (4), avec
- des moyens de transport, de groupement et d'orientation de l'au moins premier et du deuxième emballage (4) en une couche pré-compactée (16)
- une station de compactage final des au moins deux emballages (4) en une couche (16)
- des moyens d'application de points de colle entre des emballages adjacents
- des moyens de compactage et d'assemblage des emballages (4) en une couche (16),
**caractérisé en ce que**
le dispositif présente des moyens d'écartement du premier et du deuxième emballage (4), qui sont orientés par rapport en une couche pré-compactée (16).

13. Dispositif selon la revendication 12, **caractérisé en ce que** les moyens d'écartement sont réalisés en tant que cale de séparation (22), écarteur parallèle ou en tant que dispositif de levage (68) en forme de coupole ou en tant que moyens de génération d'une première accélération pour un premier emballage (4) et de génération d'une deuxième accélération pour un deuxième emballage (4).

14. Dispositif selon la revendication 12 ou 13, **caractérisé en ce que** plusieurs cales de séparation (22) ou moyens de génération d'une accélération sont prévus.

15. Dispositif selon au moins l'une quelconque des revendications 12 à 14, **caractérisé en ce qu'**un dispositif de levage (68) présente une plaque en forme de coupole (70) ou des segments individuels, dans lequel les segments sont conçus de façon à pouvoir être soulevés individuellement pour générer une surface en forme de coupole.

16. Dispositif selon au moins l'une quelconque des revendications 12 à 15, **caractérisé en ce que** les moyens d'application de points de colle entre des emballages adjacents font partie de la station de compactage des emballages (4) ou y sont utilisables en exploitation normale.
